# EUROPEAN PATENT SPECIFICATION

(11) **EP 1 651 461 B1**
(45) Date of publication and mention of the grant of the patent: **27.02.2013**
(21) Application number: 04748256.7
(22) Date of filing: 30.07.2004
(51) Int. Cl.: B60W 10/06, B60W 10/08, B60W 20/00, B60W 10/02, B60K 6/48, F02D 41/02

(54) **A METHOD AND AN APPARATUS FOR CONTROLLING A DIESEL HYBRID VEHICLE**
VERFAHREN UND VORRICHTUNG ZUR STEUERUNG EINES DIESELHYBRIDFAHRZEUGS
PROCEDE ET DISPOSITIF DE COMMANDE DE VEHICULE HYBRIDE DIESEL

(30) Priority: 31.07.2003 JP 2003204370
(43) Date of publication of application: 03.05.2006
(73) Proprietor: TOYOTA JIDOSHA KABUSHIKI KAISHA, Toyota-shi, Aichi-ken, 471-8571 (JP); AISIN SEIKI KABUSHIKI KAISHA, Kariya-shi, Aichi-ken 448-8650 (JP)
(72) Inventor: HASHIMOTO, Yoshiki, Toyota-shi, Aichi 4718571 (JP); KOMEDA, Osamu, Toyota-shi, Aichi 4718571 (JP); MURATA, Hiroki, Toyota-shi, Aichi 4718571 (JP); KITAMURA, Yuichiro c/o AISIN SEIKI K.K., I P D, Aichi 4488650 (JP); SUZUKI, Yoshihide, Kariya-shi, Aichi 4488605 (JP)
(74) Representative: TBK
(86) International application number: PCT/JP2004/011277
(87) International publication number: WO 2005/012022

(56) References cited:
- EP-A- 1 219 808
- DE-A- 10 122 713
- US-B1- 6 301 529

## Description

### TECHNICAL FIELD

The present invention relates to technology for reducing torque shock, that is, feeling of reduction in acceleration, as well as suppressing generation of smoke.

### BACKGROUND ART

The diesel hybrid vehicles are environment-friendly; therefore, they are increasingly becoming popular. A typical diesel hybrid vehicle includes a diesel engine, a multimode transmission, a clutch, a motor generator, and a turbocharger. The multimode transmission automatically shifts gears. The clutch controls transmission of power between the diesel engine and the multimode transmission by being engaged and disengaged. The motor generator assists the diesel engine. The motor generator works with electric power that is generated from the diesel engine, or that is accumulated in a battery.

In such diesel engines, an amount of fuel to be injected into it and an amount of air that enters into it are controlled based on a predetermined control map corresponding to the gear.

The motor generator basically has two modes: a power running mode and a regenerative mode. In the power running mode, mainly the motor generator drives the diesel hybrid vehicle. In the regenerative mode, the motor generator functions only as a generator. When the multimode transmission is shifting the gears, the clutch is disengaged, and when the shifting of the gear is over, the clutch is engaged.

The diesel hybrid vehicle is controlled such that high driving efficiency is obtained. This is done by appropriately choosing the diesel engine or the motor generator as the source for driving depending on a running state of the diesel hybrid vehicle. For example, assume that the diesel hybrid vehicle has just started to move from an idle state. In this case, the diesel hybrid vehicle is running at a low speed so that the engine efficiency is low; therefore, the diesel hybrid vehicle is driven only with the motor generator. On the other hand, when the diesel hybrid vehicle is running at a regular speed, because the engine efficiency is high, the diesel hybrid vehicle is driven with both the diesel engine and the motor generator.

As explained above, the clutch is disengaged while the multimode transmission is automatically shifting the gears. Because the clutch is disengaged, the driver feels an unpleasant and sudden torque shock. The torque shock is a feeling of reduction in the acceleration of the diesel hybrid vehicle.

Moreover, when the diesel engine is running in low speed (that is, low revolutions), especially when there is less load on the diesel engine, the diesel engine often generates smoke. This happens when the turbocharger cannot sufficiently supercharge the engine. In other words; this when the air that enters into a cylinder of the diesel engine is not sufficient to completely burn the fuel that is injected into the diesel engine. The smoke makes the diesel hybrid vehicles environment-non-friendly.

Japanese Patent Application Laid-Open No. H11-69509 discloses a technology to reduce the torque shock. According to this technology, when the clutch is disengaged, the motor generator assists the diesel engine.

Moreover, Japanese Patent Application Laid-Open No. 2003-74393 discloses a technology to suppress generation of smoke. According to this technology, less fuel is injected when it is detected that the air is insufficient. Such a control becomes particularly necessary when combustion inside the cylinder is switched from low-temperature combustion to regular diesel combustion. For further details and the low-temperature combustion, refer to Japanese Patent No. 3116876, US Patent No. 5937639, and EP Patent No. 0879946B1.

US patent US 6,301,529 B1 discloses a driving apparatus and method for a hybrid vehicle. The motor/generator is fixedly linked to the shaft of the diesel engine so that motor/generator and diesel engine always run with the same number of revolutions. The output shaft of the diesel engine is connected to a drive shaft via a CVT. The method further discloses in principal that torque production of the diesel engine is reduced in case smoke would be generated otherwise and the deficiency in torque is supplemented by the motor generator.

In published German patent application DE 101 22 713 A1 , which document discloses the features of the preambles of claims 1, 2, 6 and 7, a control device of a hybrid vehicle and a corresponding control method are disclosed. The hybrid vehicle comprises an engine, a multimode transmission, a clutch arranged between the engine and the multimode transmission and a motor/generator.

However, there is no conventional technology that provides a remedy for both, eliminating the torque shock and suppressing the generation of the smoke.

Moreover, a technology that can suppress the generation of the smoke without sacrificing acceleration at a time of starting the diesel hybrid vehicle to move (starting to run under a full load), which is when the smoke is often generated, has also been demanded.

### DISCLOSURE OF THE INVENTION

A method according to an aspect of the present invention is the method for controlling a diesel hybrid vehicle, according to claim 1.

A method according to another aspect of the present invention is the method for controlling a diesel hybrid vehicle, according to claim 2.

In the above method, the determining whether the output exceeds the smoke limit includes determining whether an amount of fuel that is required to be injected into the diesel engine depending upon gears shifted by the multimode transmission exceeds a maximum amount of the fuel that is combustible within the smoke limit and that is calculated from an amount of air that enters the diesel engine.

In the above method, the assisting torque production includes calculating a difference between a torque that is required for the diesel engine depending upon gears shifted by the multimode transmission and a torque that can be produced by the diesel engine with the maximum amount of the fuel; and supplementing by the motor generator a torque that is equivalent to the difference calculated.

In the above method, that the output exceeds the smoke limit means that the smoke is generated when an amount of fuel that is injected into the diesel engine is excessive for an amount of air that enters the diesel engine.

An apparatus according to still another aspect of the present invention is the apparatus for controlling a diesel hybrid vehicle, according to claim 6.

An apparatus according to still another aspect of the present invention is the apparatus for controlling a diesel hybrid vehicle, according to claim 7. amount of fuel that is required to be injected into the diesel engine depending upon gears shifted by the multimode transmission exceeds a maximum amount of the fuel that is combustible within the smoke limit and that is calculated from an amount of air that enters the diesel engine.

In the above apparatus, the clutch-engaged-time torque controlling unit calculates a difference between a torque that is required for the diesel engine depending upon gears shifted by the multimode transmission and a torque that can be produced by the diesel engine with the maximum amount of the fuel; and controls the motor generator to supplement a torque that is equivalent to the difference calculated.

In the above apparatus, that the output exceeds the smoke limit means that the smoke is generated when an amount of fuel that is injected into the diesel engine is excessive for an amount of air that enters the diesel engine.

### BRIEF DESCRIPTION OF THE DRAWINGS

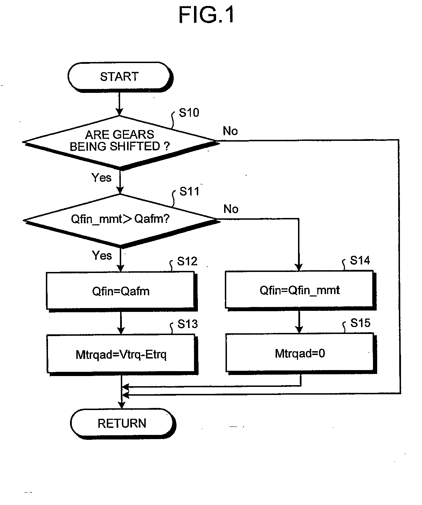

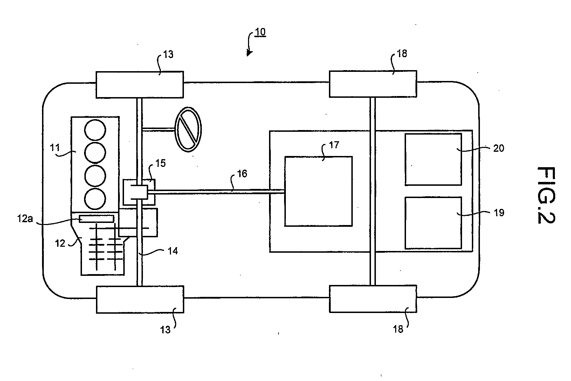

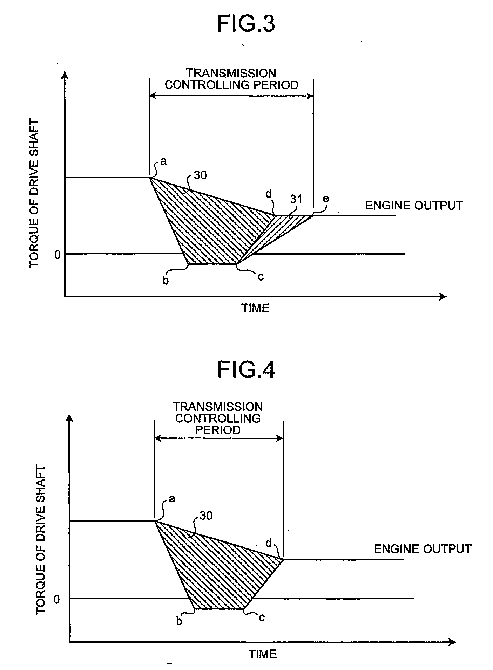

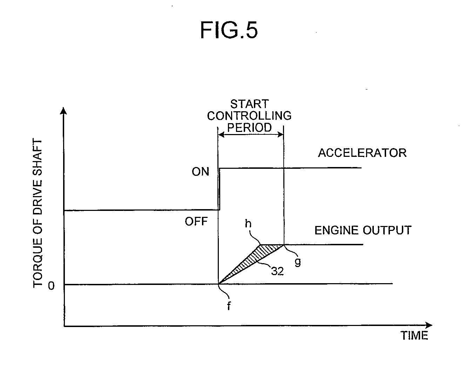

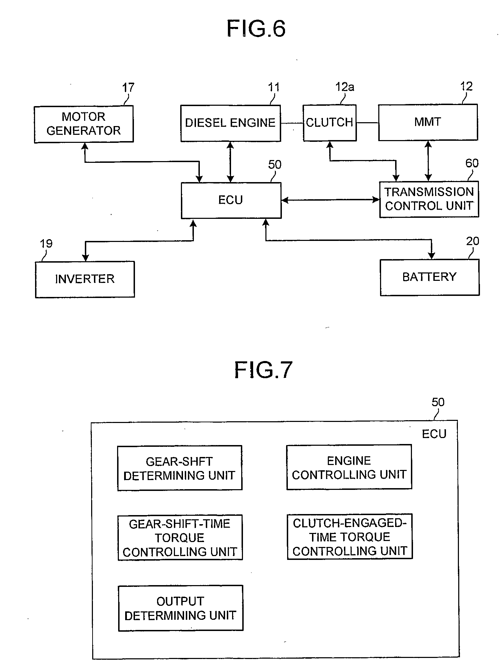

Fig. 1 is a flowchart of control that is executed when gears are shifted (shifting down) in a diesel hybrid vehicle according to an embodiment of the present invention; Fig. 2 is a schematic diagram of the diesel hybrid vehicle; Fig. 3 is a graph for explaining torque assisting control when a torque required to be produced by the diesel engine corresponding to gear after change exceeds a smoke limit; Fig. 4 is a graph for explaining the torque assisting control a torque required to be produced by the diesel engine corresponding to gear after change does not exceed the smoke limit; Fig. 5 is a graph for explaining the torque assisting control when the diesel hybrid vehicle starts moving from and idle state and a torque required to be produced by the diesel engine corresponding to gear after change exceeds the smoke limit; Fig. 6 is a block diagram of an apparatus for controlling the diesel hybrid vehicle according to the embodiment; and Fig. 7 is a detailed diagram of the configuration of a ECU shown in Fig. 6.

### BEST MODE FOR CARRYING OUT THE INVENTION

Exemplary embodiments of a method and an apparatus according to the present invention are explained below in detail with reference to accompanying drawings. The present invention is not to be limited to these embodiments.

Fig. 2 is a schematic diagram of relevant parts of a diesel hybrid vehicle 10. For the sake of explanation it is assumed here that the diesel hybrid vehicle 10 is a front-wheel-drive vehicle.

The diesel hybrid vehicle 10 includes a diesel engine 11 as a driving power source. The diesel engine 11 is arranged in a front part of the diesel hybrid vehicle 10. In the diesel engine11, an amount of fuel to be injected into the diesel engine and a timing in which the fuel is injected are controlled by a fuel injecting system (not shown) that is based on the common rail system. An amount of air that enters the diesel engine 11 is detected by an air flow meter (not shown).

The diesel engine 11 further includes a turbo charger (not shown) that increases an amount of air aspiration by using pressure of exhaust gas, and a variable valve-timing mechanism (not shown) that controls to adjust timing in which an aspiration valve and an exhaust valve are opened or closed. Moreover, the diesel engine 11 includes a hydrocarbon adsorption catalysis (not shown) to adsorb hydrocarbon (HC) included in the exhaust gas, and an exhaust gas recirculation device (not shown) that recirculates some of the exhaust gas into an air aspiration system in its exhaust path.

Driving power generated by the diesel engine 11 is transmitted to front wheels 13 via a multimode transmission (MMT) 12 and a drive shaft 14. A transmission control unit 60 (see Fig. 6) controls shifting of gears of the MMT 12 according to a running state using an actuator. An electronic control unit (ECU) 50 (see Figs. 6 and 7) provides an overall control on all the structural elements of the diesel hybrid vehicle 10. Therefore, there is no need to provide a torque converter.

The amount of the fuel to be injected and the amount of the air aspiration in the diesel engine 11 are controlled such that a required engine torque is achieved depending on in which gear the diesel engine 11 is operating. The amount of the fuel that is required for the diesel engine 11 is determined based on a map (not shown) to correspond, for example, to number of engine revolutions (revolution speed) and how much the accelerator is opened. Then, only the fuel that is determined in this manner is injected into a cylinder of the diesel engine 11. The amount of the fuel is determined depending on a smoke limit. If the smoke limit is violated, that is, if unnecessarily higher amount of fuel is injected, then the diesel engine 11 generates smoke. Although the smoke limit varies depending on the current state of the diesel engine, basically the violation of the smoke limit occurs when excess fuel is injected in the cylinder of the diesel engine.

The diesel hybrid vehicle 10 includes a clutch 12a that controls transmission of power between the diesel engine 11 and the MMT 12. The clutch 12a is automatically controlled to be engaged or disengaged according to the running state, using an actuator.

A transfer 15 controls whether the front wheels 13 are to receive drive from the diesel engine 11 or from a motor generator 17. A propeller shaft 16 connects the transfer 15 to the motor generator 17. The motor generator 17 has integrated gear trains. Rear wheels 18 are not driven. In other words, the rear wheels are just drawn by the front wheels 13.

The motor generator 17 is electrically connected to a battery 20, which is a secondary battery, through an inverter 19. The battery 20 is a rechargeable battery. The motor generator 17 can be driven in two modes: a power running mode and a regenerative mode. In the power running mode, the motor generator 17 drives the front wheels 13 via the propeller shaft 16 and the transfer 15. In the regenerative mode, the motor generator 17 is driven with the torque from the diesel engine 11 or the drive shaft 14 via the transfer 15 and the propeller shaft 16. As a result, electricity is generated and the battery 20 is charged via the inverter 19.

In which mode the motor generator 17 is to be operated is determined based on a state-of-charge (SOC) of the battery 20. A computer (not shown) determines the SOC of the battery 20.

There is no specific limitation on the structure of the motor generator 17. For example, the motor generator 17 may include a generator that operates in the power running mode and a generator that operates in the regenerative mode.

While the diesel hybrid vehicle 10 is steadily running at a low speed under a low load, the ECU 50 controls the diesel hybrid vehicle 10 to run only with the power from the motor generator 17. In other words, the ECU 50 puts the motor generator 17 in the power running mode (EV mode). When speed or load of the diesel hybrid vehicle 10 reaches a predetermined speed or load, the ECU 50 cranks, via the transmission control unit 60, the diesel engine 11 with the power of the motor generator 17, so that the diesel hybrid vehicle 10 is run only with the power from the diesel engine 11.

While the diesel hybrid vehicle 10 is running steadily, the ECU 50 controls the diesel engine 11 so as to be driven in such a manner that the output of the diesel engine 11 corresponds to the power required for the drive shaft 14. In such a state, almost all of the power output by the diesel engine 11 is transmitted to the drive shaft 14.

On the other hand, if the charge in the battery 20 is below a predetermined value, the diesel engine 11 is driven in such a manner that the diesel engine 11 outputs more power than the power required for the drive shaft 14. The motor generator 17 converts a part of the surplus power into electricity and the battery 20 is charged with this electricity. If the torque produced by the diesel engine 11 is insufficient, the motor generator 17 assists the diesel engine 11 so that sufficient torque can be produced.

In the diesel hybrid vehicle 10, economy and ecology running control is also performed for a purpose of saving the fuel and reducing emissions. For example, when the diesel hybrid vehicle 10 stops at an intersection for a traffic light to change, the diesel engine 11 is automatically stopped if a predetermined condition is fulfilled, and then, the diesel engine 11 is re-started when another predetermined condition is fulfilled. The another predetermined condition is, for example, when the accelerator is operated.

A method of controlling the diesel hybrid vehicle 11 when gears are shifted is explained next with reference to Figs. 1 to 4. Fig. 1 is a flowchart of control that is executed when gears are shifted (shifting down). Fig. 3 is a graph for explaining torque assisting control when the torque that is required to be produced by the diesel engine 11 depending on the gear after change exceeds the smoke limit. Fig. 4 is a graph for explaining the torque assisting control when the torque that is required to be produced by the diesel engine 11 depending on the gear after change does not exceed the smoke limit.

In Figs. 3 and 4, a hatched area 30 defined by the geometric shape abcd and a hatched area 31 defined by the triangle cde together represent an amount of torque that is produced by the motor generator 17 during a transmission controlling period, which is a period in which gears are being shifted. Gradients of lines cd and ce represent the output of the diesel engine 11, that is, the amount of the fuel injected into the diesel engine 11.

The control described below is executed by the ECU 50. As shown in Fig. 7, the ECU 50 includes a gear-shift determining unit that determines whether gears are shifted while the diesel hybrid vehicle is running with the diesel engine, a gear-shift-time torque controlling unit that controls, if the gear-shift determining unit determines that the gears are shifted while the diesel hybrid vehicle is running with the diesel engine, the motor generator to assist torque production to supplement reduction in an output, which is transmitted from the diesel engine, that occurs due to non-engagement of the clutch with the diesel engine; an output determining unit that determines whether an output that is required for the diesel engine when the clutch is engaged with the diesel engine exceeds a smoke limit; an engine controlling unit that controls, if the output determining unit determines the output exceeds the smoke limit, the diesel engine such that the diesel engine runs within the smoke limit; and a clutch-engaged-time torque controlling unit that controls, if the output determining unit determines the output exceeds the smoke limit, the motor generator assisting torque production to supplement insufficiency in an output of the diesel engine that occurs because the diesel engine is run within the smoke limit

To begin with, it is determined whether gears are being shifted by the MMT 12 (for example, shifting one gear down) (step S10 in Fig. 1). If the gears are not being shifted (No at step S10), the control is suspended until the gears are shifted.

If the gears are being shifted (Yes at step S10), because the clutch 12a is disengaged while the gears are being shifted, the transmission of the power output by the diesel engine 11 to the drive shaft 14 is cut. As a result, a torque represented by the geometric shape abcd in Fig. 3 becomes deficient and the torque shock occurs. In this event, according to the present invention, the motor generator 17 assists the torque production to suppress or eliminate the torque shock. The MMT 12 shifts gears based on a predetermined map for shifting gears within a period between the points b and c shown in Fig. 3.

Then, it is determined whether an amount of the fuel Qfin_mmt that is required for the diesel engine 11 for the shifted-gear exceeds a maximum amount of the fuel Qafm that is combustible within the smoke limit (step S11). The maximum amount of the fuel Qafm is calculated from an amount of the air aspiration, which is detected by the air flow meter.

If the amount of the fuel Qfin_mmt exceeds the maximum amount of the fuel Qafm (Yes at step S11), the maximum amount of the fuel Qafm is set to a default final amount of the fuel Qfin (step S12). The final amount of the fuel Qfin is the amount of the fuel that is combustible within the smoke limit. Thus, the final amount of the fuel Qfin is injected into the diesel engine 11. In other words, the diesel engine 11 is controlled to output maximum power that can be output within the smoke limit.

In Fig. 3, the maximum power, which can be output by the diesel engine 11 with the final amount of the fuel, corresponds to a gradient of a line ce. The hatched area 31 defined by the triangle cde represents a torque that cannot be produced by the diesel engine 11. This deficiency in the torque causes the torque shock. In the present invention, this deficiency in the torque is compensated by a torque from the motor generator 17 so that the torque shock is eliminated or reduced.

The amount of the torque .that is deficient, Mtrqad, is a difference between a required torque Vtrq for the diesel engine 11 depending upon gears shifted by the MMT 12 and a torque Etrq that can be produced by the diesel engine 11 with the final amount of the fuel Qfin (step S13). The torque Mtrqad corresponds to the hatched area 31 in Fig. 3. The motor generator 17 assists the torque production to supplement a torque equivalent to the torque Mtrqad. The torque assisting control is executed while the clutch 12a is being engaged when gears are shifted, and the torque assisting thus controlled is carried out smoothly and efficiently as well as the torque assisting that is shown as the hatched area 31.

Thus, with a minimum amount of the torque assisting control by the motor generator 17, it is possible to both reduce the torque shock and suppress the generation of the smoke. Once the step S13 is executed, the entire process shown in Fig. 1 is repeated.

However, if the amount of the fuel Qfin_mmt does not exceed the maximum amount of the fuel Qafm (No at step S11), the amount of the fuel Qfin_mmt is set as the final amount of the fuel Qfin (step S14), because the amount of the fuel Qfin_mmt is combustible within the smoke limit. Thus, the amount of the fuel Qfin_mmt is injected into the diesel engine 11.

As shown in Fig. 4, during the transmission controlling period, the transmission of the output of the diesel engine 11 is once restricted, as represented by a gradient of a line ab, and then, is restored, as represented by a gradient of a line cd, as required for gears shifted by the MMT 12. Conventionally, the restoring of the transmission is performed without considering the smoke limit so that torque reduction occurs when the transmission of the output is cut because the clutch 12a is disengaged. The torque reduction corresponds only to the hatched area 30 that forms a geometric shape abcd shown in Fig. 4. In this event, according to the present invention, the motor generator 17 assists the torque production to supplement the torque that corresponds to the hatched area 30 to supplement or eliminate the torque shock.

The torque assisting for the hatched area 31 shown in Fig. 3 is not necessary. Therefore, as shown in Fig. 1, zero is substituted for the torque Mtrqad, which is the torque to be supplemented by the motor generator (step S15). Once the step S15 is executed, the entire process shown in Fig. 1 is repeated.

Thus, it is possible to reduce the torque shock and suppress the generation of the smoke. Such effects are especially beneficial when the turbo charger does not work when the diesel hybrid vehicle 10 is running at low speed.

A method of torque assisting control that is executed when an output that is required for the diesel engine 11 depending upon gears shifted by the MMT 12 to start moving the diesel hybrid vehicle under a full load exceeds the smoke limit is explained next with reference to Fig. 5. Fig. 5 is a graph for explaining the torque assisting control when the output required to start moving the diesel hybrid vehicle 10 from an idle state under a full load exceeds the smoke limit.

In Fig. 5, a hatched area 32 defined by the triangle fgh indicates an amount of the torque that is produced by the motor generator 17 during a start controlling period, which is a period in which the diesel hybrid vehicle is controlled to start moving. Gradient of a line fg represents a maximum torque produced by the diesel engine 11 under restriction of the smoke limit. In other words, the gradient of the line fg represents the amount of torque produced with the amount of the fuel Qafm. Gradient of a line fh indicates an amount of torque required for the diesel engine 11 depending on gears shifted by the MMT 12. In other words, the gradient of the line fh indicates an amount of torque produced by the diesel engine 11 with the amount of the fuel Qfin_mmt.

As shown in Fig. 5, when the accelerator is switched from OFF to ON (that is, when the accelerator is operated), the torque that is equivalent to the gradient of the line fh is required for the diesel engine 11 depending upon the shifted gear. However, because the diesel engine 11 is controlled to run within the smoke limit, the torque produced by the diesel engine 11 is equivalent to the gradient of the line fg.

The gradient of the line fh is higher than the gradient of the line fg. In other words, there is a deficiency of torque equivalent to the hatched area 32. This deficiency in the torque causes the torque shock. According to the present invention, the deficient torque is supplemented by assisting the torque production with the motor generator 17 so that the torque shock is eliminated or suppressed.

Thus, it is possible to suppress the generation of the smoke without sacrificing acceleration by the torque assisting control with the motor generator 17 even when the smoke is likely to be generated due to insufficient amount of air that enters the diesel engine 11. The insufficiency in air is caused because the turbo charger does not work when the diesel hybrid vehicle 10 is started to move under a full load.

As described above, according to the present invention, it is possible to reduce the torque shock so that the driver does not feel the unpleasant reduction in the acceleration. Moreover, it is also possible to suppress the generation of the smoke. Such effects are especially beneficial when the turbo charger does not work during the diesel hybrid vehicle is running at low speed (low engine revolutions).

Moreover, it is possible to suppress the generation of the smoke without sacrificing acceleration by the torque assisting control performed by the motor generator even when the smoke is likely to be generated due to insufficient amount of air aspiration, which is caused because the turbo charger does not work when the diesel hybrid vehicle is started to move under a full load.

Furthermore, it is determined whether the output that is required for the diesel engine exceeds the smoke limit based on the maximum amount of the fuel that is combustible within the smoke limit. Therefore, control of the diesel engine to output maximum power that can be output within the smoke limit is facilitated.

Moreover, the diesel engine is controlled to output maximum power that can be output within the smoke limit. Therefore, the torque production that is assisted by the motor generator can be minimized, and efficient torque assisting can be carried out.

Furthermore, the motor generator is controlled to assist the torque production. Therefore, it is possible to reduce the torque shock as well as suppress the generation of the smoke.

Moreover, it is possible to suppress the generation of the smoke without sacrificing acceleration at a time when the diesel hybrid vehicle is started to move under a full load by controlling the motor generator to assist the torque production.

### INDUSTRIAL APPLICABILITY

The apparatus and the method of the present invention are useful for controlling the engine of a diesel hybrid vehicle.

## Claims

1. A method of controlling a diesel hybrid vehicle (10), wherein the diesel hybrid vehicle (10) includes
a diesel engine (11);
a multimode transmission (12) that can automatically shift gears;
a clutch (12a) that controls transmission of power between the diesel engine (11) and the multimode transmission (12) by engaging or not engaging with the diesel engine (11); and
a motor generator (17) that supplements an output of the diesel engine (11) with an electric power, wherein the electric power is generated by the diesel engine (11), or is accumulated in a battery (20), the method comprising:
determining whether gears are shifted while the diesel hybrid vehicle (10) is running with the diesel engine (11), and if the gears are controlled to be shifted while the diesel hybrid vehicle (10) is running with the diesel engine (11),
the motor generator (17) assisting torque production to supplement reduction in an output, which is transmitted from the diesel engine (11), that occurs from a beginning of a clutch control from an engaged state to a disengaged state of the clutch (12) with the diesel engine (11) (S10); and the method being
**characterized by**
determining whether an output that is required torque for the diesel engine (11) when the clutch (12a) is engaged with the diesel engine (11) and the gears are controlled to be shifted by the multimode transmission (12) exceeds a smoke limit after finishing of the gear shift operation after the beginning of the clutch control from the engaged state to the disengaged state of the clutch (12a), and if the output exceeds the smoke limit (S11), controlling the diesel engine (11) such that the diesel engine (11) runs within the smoke limit,
the motor generator (17) assisting torque production to supplement insufficiency in the output transmitted from the diesel engine (11) that occurs because the diesel engine (11) is run within the smoke limit (S12), and
the torque produced after the beginning of the clutch control from the engaged state to the disengaged state of the clutch (12a) during the control of shifting, and the torque produced after the finishing of the gear shift are controlled so as to reduce a torque shock.

2. A method of controlling a diesel hybrid vehicle (10), wherein the diesel hybrid vehicle (10) includes
a diesel engine (11);
a multimode transmission (12) that can automatically shift gears;
a clutch (12a) that controls transmission of power between the diesel engine (11) and the multimode transmission (12) by engaging or not engaging with the diesel engine (11); and
a motor generator (17) that supplements an output of the diesel engine (11) with an electric power, wherein the electric power is generated by the diesel engine (11), or is accumulated in a battery (20), the method being
**characterized by**
determining whether an output that is required torque for the diesel engine (11) when the gears are shifted by the multimode transmission (12), the clutch (12a) is engaged with the diesel engine (11) and the diesel engine (11) starts moving the diesel hybrid vehicle (10) from an idle state exceeds a smoke limit, and if the torque output exceeds a smoke limit,
controlling the diesel engine (11) such that the diesel engine (11) runs within the smoke limit, and
the motor generator (17) assisting torque production to supplement an insufficiency in an output of the diesel engine (11) that occurs because the diesel engine (11) is run within the smoke limit, wherein
the torque produced after the finishing of the gear shift is controlled so as to reduce a torque shock.

3. The method according to claim 1 or 2, wherein the determining
whether the output exceeds the smoke limit (S11) includes
determining whether an amount of fuel (Qfin_mmt) that is required to be injected into the diesel engine (11) depending upon gears shifted by the multimode transmission (12) exceeds a maximum amount of the fuel (Qafm) that is combustible within the smoke limit and that is calculated from an amount of air that enters the diesel engine (11).

4. The method according to claim 3, wherein the assisting torque production includes
calculating a difference between a torque (Vtrq) that is required for the diesel engine (11) depending upon gears shifted by the multimode transmission (12) and a torque (Etrq) that can be produced by the diesel engine (11) with the maximum amount of the fuel (Qafm); and
supplementing by the motor generator (17) a torque (Mtrqad) that is equivalent to the difference calculated (S13).

5. The method according to claim 1 or 2, wherein that the output exceeds the smoke limit means that the smoke is generated when an amount of fuel that is injected into the diesel engine (11) is excessive for an amount of air that enters the diesel engine (11).

6. An apparatus (50) for controlling a diesel hybrid vehicle (10), wherein the diesel hybrid vehicle (10) includes
a diesel engine (11);
a multimode transmission (12) that can automatically shift gears;
a clutch (12a) that controls transmission of power between the diesel engine (11) and the multimode transmission (12) by engaging or not engaging with the diesel engine (11); and
a motor generator (17) that supplements an output of the diesel engine (11) with an electric power, wherein the electric power is generated by the diesel engine (11), or is accumulated in a battery (20), the apparatus (50) comprising:
a gear-shift determining unit that determines whether gears are shifted while the diesel hybrid vehicle (10) is running with the diesel engine (11);
a gear-shift-time torque controlling unit that controls, if the gear-shift determining unit determines that the gears are controlled to be shifted while the diesel hybrid vehicle (10) is running with the diesel engine (11), the motor generator (17) to assist torque production to supplement reduction in an output, which is transmitted from the diesel engine (11), that occurs from a beginning of a clutch control from an engaged state to a disengaged state of the clutch (12a) with the diesel engine (11); the apparatus (50) being
**characterized by**
an output determining unit that determines whether an output that is required torque for the diesel engine (11) when the clutch (12a) is engaged with the diesel engine (11) and the gears are controlled to be shifted by the multimode transmission (12) exceeds a smoke limit after finishing of the gear shift operation after the beginning of the clutch control from the engaged state to the disengaged state of the clutch (12a);
an engine controlling unit that controls, if the output determining unit determines the output exceeds the smoke limit, the diesel engine (11) such that the diesel engine (11) runs within the smoke limit; and
a clutch-engaged-time torque controlling unit that controls, if the output determining unit determines the output exceeds the smoke limit, the motor generator (17) assisting torque production to supplement insufficiency in an output of the diesel engine (11) that occurs because the diesel engine (11) is run within the smoke limit, wherein
the torque produced after the beginning of the clutch control from the engaged state to the disengaged state of the clutch (12a) during the control of shifting, and the torque produced after the finishing of the gear shift are controlled so as to reduce a torque shock.

7. An apparatus (50) for controlling a diesel hybrid vehicle (10), wherein the diesel hybrid vehicle (10) includes
a diesel engine (11);
a multimode transmission (12) that can automatically shift gears;
a clutch (12a) that controls transmission of power between the diesel engine (11) and the multimode transmission (12) by engaging or not engaging with the diesel engine (11); and
a motor generator (17) that supplements an output of the diesel engine (11) with an electric power, wherein the electric power is generated by the diesel engine (11), or is accumulated in a battery (20), the apparatus (50) being
**characterized by**
an output determining unit that determines whether an output that is a required torque for the diesel engine (11) when the gears are shifted by the multimode transmission (12), the clutch (12a) is engaged with the diesel engine (11) and the diesel engine (11) starts moving the diesel hybrid vehicle (10) from an idle state exceeds a smoke limit;
an engine controlling unit that controls, if the output determining unit determines that the torque output exceeds the smoke limit, the diesel engine (11) such that the diesel engine (11) runs within the smoke limit; and
a clutch-engaged-time torque controlling unit that controls, if the output determining unit determines that the torque output exceeds the smoke limit, the motor generator (17) assisting torque production to supplement an insufficiency in an output of the diesel engine (11) that occurs because the diesel engine (11) is run within the smoke limit, wherein
the torque produced after the finishing of the gear shift is controlled so as to reduce a torque shock.

8. The apparatus (50) according to claim 6 or 7, wherein the output determining unit determines whether the output exceeds the smoke limit based on
whether an amount of fuel (Qfin_mmt) that is required to be injected into the diesel engine (11) depending upon gears shifted by the multimode transmission (12) exceeds a maximum amount of the fuel (Qafm) that is combustible within the smoke limit and that is calculated from an amount of air that enters the diesel engine (11).

9. The apparatus (50) according to claim 8, wherein the clutch-engaged-time torque controlling unit
calculates a difference between a torque (Vtrq) that is required for the diesel engine (11) depending upon gears shifted by the multimode transmission (12) and a torque (Etrq) that can be produced by the diesel engine (11) with the maximum amount of the fuel (Qafm); and
controls the motor generator (17) to supplement a torque (Mtrqad) that is equivalent to the difference calculated.

10. The apparatus (50) according to claim 6 or 7, wherein that the output exceeds the smoke limit means that the smoke is generated when an amount of fuel that is injected into the diesel engine (11) is excessive for an amount of air that enters the diesel engine (11).

## Patentansprüche

1. Verfahren zum Steuern eines Dieselhybridfahrzeugs (10), wobei das Dieselhybridfahrzeug (10) folgendes aufweist
eine Dieselmaschine (11);
ein Mehrmodusgetriebe (12), das automatisch Gänge wechseln kann;
eine Kupplung (12a), die eine Übertragung einer Kraft zwischen der Dieselmaschine (11) und dem Mehrmodusgetriebe (12) durch ein Einrücken oder Nichteinrücken mit der Dieselmaschine (11) steuert; und
einen Motorgenerator (17), der eine Ausgabe der Dieselmaschine (11) mit einer elektrischen Leistung ergänzt, wobei die elektrische Leistung durch die Dieselmaschine (11) erzeugt wird oder in einer Batterie (20) akkumuliert ist, wobei das Verfahren folgendes aufweist:
Bestimmen, ob die Gänge geschaltet werden, während das Dieselhybridfahrzeug (10) mit der Dieselmaschine (11) läuft, und ob die Gänge gesteuert werden, um geschalten zu werden, während das Dieselhybridfahrzeug (10) mit der Dieselmaschine (11) läuft,
wobei der Motorgenerator (17) eine Drehmomenterzeugung unterstützt, um eine Reduktion in einer Ausgabe zu ergänzen, die von der Dieselmaschine (11) übertragen wird, die von einem Beginn einer Kupplungssteuerung von einem eingerückten Zustand zu einem ausgerückten Zustand der Kupplung (12) mit der Dieselmaschine (11) (S10) auftritt; und wobei das Verfahren **gekennzeichnet ist, durch**
ein Bestimmen, ob eine Ausgabe, die ein erforderliches Drehmoment für die Dieselmaschine (11) ist, wenn die Kupplung (12a) mit der Dieselmaschine (11) eingerückt ist und die Gänge gesteuert werden, um durch das Mehrmodusgetriebe (12) geschaltet zu werden, einen Rauchgrenzwert nach einem Beenden der Gangschaltbetätigung nach dem Beginn der Kupplungssteuerung von dem eingerückten Zustand zu dem ausgerückten Zustand der Kupplung (12a) übersteigt, und falls die Ausgabe den Rauchgrenzwert (11) übersteigt, ein Steuern der Dieselmaschine (11) derart, dass die Dieselmaschine (11) innerhalb des Rauchgrenzwerts läuft,
wobei der Motorgenerator (17), der eine Drehmomenterzeugung unterstützt, um eine Insuffizienz der Ausgabe zu ergänzen, die von der Dieselmaschine (11) übertragen wird, welche auftritt, weil die Dieselmaschine (11) innerhalb des Rauchgrenzwerts (S12) läuft, und
wobei das Drehmoment, das nach dem Beginn der Kupplungssteuerung von dem eingerückten Zustand zu dem ausgerückten Zustand der Kupplung (12a) während der Schaltsteuerung erzeugt ist, und das Drehmoment, das nach dem Beenden des Gangschaltens erzeugt ist, gesteuert werden, um einen Drehmomentruck zu verringern.

2. Verfahren zum Steuern eines Dieselhybridfahrzeugs (10), wobei das Dieselhybridfahrzeug (10) folgendes aufweist
eine Dieselmaschine (11);
ein Mehrmodusgetriebe (12), das automatisch Gänge wechseln kann;
eine Kupplung (12a), die eine Übertragung einer Kraft zwischen der Dieselmaschine (11) und dem Mehrmodusgetriebe (12) durch Einrücken oder Nichteinrücken mit der Dieselmaschine (11) steuert; und
einen Motorgenerator (17), der eine Ausgabe der Dieselmaschine (11) mit einer elektrischen Leistung ergänzt, wobei die elektrische Leistung durch die Dieselmaschine (11) erzeugt wird oder in einer Batterie (20) akkumuliert ist, wobei das Verfahren **gekennzeichnet ist durch**
ein Bestimmen, ob eine Ausgabe, die ein erforderliches Drehmoment für die Dieselmaschine (11) ist, wenn die Gänge **durch** das Mehrmodusgetriebe (12) geschaltet werden, wobei die Kupplung (12a) mit der Dieselmaschine (11) eingerückt ist und die Dieselmaschine (11) beginnt, das Dieselhybridfahrzeug (10) von einem Leerlaufzustand aus zu bewegen, einen Rauchgrenzwert übersteigt, und falls die Drehmomentausgabe einen Rauchgrenzwert übersteigt, ein Steuern der Dieselmaschine (11) derart, dass die Dieselmaschine (11) innerhalb des Rauchgrenzwerts läuft, und
wobei der Motorgenerator (17) eine Drehmomenterzeugung unterstützt, um eine Insuffizienz in einer Ausgabe der Dieselmaschine (11) zu ergänzen, die auftritt, weil die Dieselmaschine (11) innerhalb des Rauchgrenzwerts betrieben wird, wobei
das Drehmoment, das nach dem Beenden des Gangschaltens erzeugt ist, gesteuert wird, um einen Drehmomentruck zu verringern.

3. Verfahren nach Anspruch 1 oder 2, wobei das Bestimmen, ob die Ausgabe den Rauchgrenzwert (S11) übersteigt, ein Bestimmen aufweist, ob eine Menge von Kraftstoff (Qfin_mmt), die in Abhängigkeit von Gängen, die durch das Mehrmodusgetriebe (12) geschaltet werden, erforderlich ist, um in die Dieselmaschine (11) eingespritzt zu werden, eine maximale Menge des Kraftstoffs (Qafn) übersteigt, die innerhalb des Rauchgrenzwerts verbrennbar ist und die aus einer Menge von Luft berechnet wird, die in die Dieselmaschine (11) eintritt.

4. Verfahren nach Anspruch 3, wobei das Unterstützen einer Drehmomenterzeugung folgendes aufweist
ein Berechnen einer Differenz zwischen einem Drehmoment (Vtrq), das für die Dieselmaschine (11) in Abhängigkeit von Gängen, die durch das Mehrmodusgetriebe (12) geschaltet werden, erforderlich ist, und einem Drehmoment (Etrq), das mit der maximalen Menge des Kraftstoffs (Qafm) durch die Dieselmaschine (11) erzeugt werden kann; und
ein Ergänzen eines Drehmoments (Mtrqab) durch den Motorgenerator (17), das zu der berechneten Differenz äquivalent ist (S13).

5. Verfahren nach Anspruch 1 oder 2, wobei das, dass die Ausgabe den Rauchgrenzwert übersteigt, bedeutet, dass der Rauch, der erzeugt wird, wenn eine Menge von Kraftstoff, die in die Dieselmaschine (11) eingespritzt wird, für eine Menge von Luft übermäßig ist, die in die Dieselmaschine (11) eintritt.

6. Vorrichtung (50) zum Steuern eines Dieselhybridfahrzeugs (10), wobei das Dieselhybridfahrzeug (10) folgendes aufweist
eine Dieselmaschine (11);
ein Mehrmodusgetriebe (12), das automatisch Gänge wechseln kann;
eine Kupplung (12a), die eine Übertragung einer Kraft zwischen der Dieselmaschine (11) und dem Mehrmodusgetriebe (12) durch ein Einrücken oder Nichteinrücken mit der Dieselmaschine (11) steuert; und
einen Motorgenerator (17), der eine Ausgabe der Dieselmaschine (11) mit einer elektrischen Leistung ergänzt, wobei die elektrische Leistung durch die Dieselmaschine (11) erzeugt wird oder in einer Batterie (20) akkumuliert ist, wobei die Vorrichtung (50) folgendes aufweist:
eine Gangschaltbestimmungseinheit, die bestimmt, ob Gänge geschaltet werden, während das Dieselhybridfahrzeug (10) mit der Dieselmaschine (11) läuft;
eine Gangschaltzeitdrehmomentsteuereinheit, die dann, falls die Gangschaltbestimmungseinheit bestimmt, dass die Gänge gesteuert werden, um geschaltet zu werden, während das Dieselhybridfahrzeug (10) mit der Dieselmaschine (11) läuft, den Motorgenerator (17) steuert, um eine Drehmomenterzeugung zu unterstützen, um eine Verringerung in einer Ausgabe zu ergänzen, die von der Dieselmaschine (11) übertragen wird, welche von einem Beginn einer Kupplungssteuerung von einem eingerückten Zustand zu einem ausgerückten Zustand der Kupplung (12a) mit der Dieselmaschine (11) auftritt; wobei die Vorrichtung (50) **gekennzeichnet ist durch**
eine Ausgabebestimmungseinheit, die bestimmt, ob eine Ausgabe, die ein erforderliches Drehmoment für die Dieselmaschine (11) ist, wenn die Kupplung (12a) mit der Dieselmaschine (11) eingerückt ist und die Gänge gesteuert werden, um **durch** das Mehrmodusgetriebe (12) geschaltet zu werden, einen Rauchgrenzwert nach einem Beenden der Gangschaltbetätigung nach dem Beginn der Kupplungssteuerung von dem eingerückten Zustand zu dem ausgerückten Zustand der Kupplung (12a) übersteigt;
eine Maschinensteuereinheit, die dann, falls die Ausgabebestimmungseinheit bestimmt, dass die Ausgabe den Rauchgrenzwert übersteigt, die Dieselmaschine (11) derart steuert, dass die Dieselmaschine (11) innerhalb des Rauchgrenzwerts läuft; und
eine Kupplungseingriffszeitdrehmomentsteuereinheit, die dann, falls die Ausgabebestimmungseinheit bestimmt, dass die Ausgabe den Rauchgrenzwert übersteigt, den Motorgenerator (17), der eine Drehmomenterzeugung unterstützt, steuert, um eine Insuffizienz in einer Ausgabe der Dieselmaschine (11) zu ergänzen, die auftritt, weil die Dieselmaschine (11) innerhalb des Rauchgrenzwerts läuft, wobei
das Drehmoment, das nach dem Beginn der Kupplungssteuerung von dem eingerückten Zustand zu dem ausgerückten Zustand der Kupplung (12a) während der Steuerung eines Schaltens erzeugt ist, und das Drehmoment, das nach dem Beenden des Gangsschaltens erzeugt ist, gesteuert werden, um einen Drehmomentruck zu verringern.

7. Vorrichtung (50) zum Steuern eines Dieselhybridfahrzeugs (10), wobei das Dieselhybridfahrzeug (10) folgendes aufweist
eine Dieselmaschine (11);
ein Mehrmodusgetriebe (12), das automatisch Gänge wechseln kann;
eine Kupplung (12a), die eine Übertragung einer Kraft zwischen der Dieselmaschine (11) und dem Mehrmodusgetriebe (12) durch ein Einrücken oder Nichteinrücken mit der Dieselmaschine (11) steuert; und
einen Motorgenerator (17), der eine Ausgabe der Dieselmaschine (11) mit einer elektrischen Leistung ergänzt, wobei die elektrische Leistung durch die Dieselmaschine (11) erzeugt wird oder in einer Batterie (20) akkumuliert ist, wobei die Vorrichtung (50) **gekennzeichnet ist, durch**
eine Ausgabebestimmungseinheit, die bestimmt, ob eine Ausgabe, die ein erforderliches Drehmoment für die Dieselmaschine (11) ist, wenn die Gänge **durch** das Mehrmodusgetriebe (12) geschaltet werden, wobei die Kupplung (12a) mit der Dieselmaschine (11) eingerückt ist und die Dieselmaschine (11) beginnt, das Dieselhybridfahrzeug (10) aus einem Leerlaufzustand heraus zu bewegen, einen Rauchgrenzwert übersteigt;
eine Maschinensteuereinheit, die dann, falls die Ausgabebestimmungseinheit bestimmt, dass die Drehmomentausgabe den Rauchgrenzwert übersteigt, die Dieselmaschine (11) derart steuert, dass die Dieselmaschine (11) innerhalb des Rauchgrenzwerts läuft; und
eine Kupplungseingriffszeitdrehmomentsteuereinheit, die dann, falls die Ausgabebestimmungseinheit bestimmt, dass die Drehmomentausgabe den Rauchgrenzwert übersteigt, den Motorgenerator (17), der eine Drehmomenterzeugung unterstützt, steuert, um eine Insuffizienz in einer Ausgabe der Dieselmaschine (11) zu ergänzen, die auftritt, weil die Dieselmaschine (11) innerhalb des Rauchgrenzwerts betrieben wird, wobei
das Drehmoment, das nach dem Beenden des Gangschaltens, erzeugt ist, gesteuert wird, um einen Drehmomentruck zu verringern.

8. Vorrichtung (50) nach Anspruch 6 oder 7, wobei die Ausgabebestimmungseinheit bestimmt, ob die Ausgabe den Rauchgrenzwert übersteigt basierend darauf,
ob eine Menge von Kraftstoff (Qfin_mmt), die abhängig von Gängen, die durch das Mehrmodusgetriebe (12) geschaltet werden, erforderlich ist, um in die Dieselmaschine (11) eingespritzt zu werden, eine maximale Menge des Kraftstoffs (Qafm) übersteigt, die innerhalb des Rauchgrenzwerts verbrennbar ist und die aus einer Menge von Luft berechnet ist, die in die Dieselmaschine (11) eintritt.

9. Vorrichtung (50) nach Anspruch 8, wobei die Kupplungseingriffszeitdrehmomentsteuereinheit
eine Differenz zwischen einem Drehmoment (Vtrq), das für die Dieselmaschine (11) in Abhängigkeit von Gängen, die durch das Mehrmodusgetriebe (12) geschaltet werden, erforderlich ist, und einem Drehmoment (Etrq) berechnet, das durch die Dieselmaschine (11) mit der maximalen Menge des Kraftstoffs (Qafm) erzeugt werden kann; und
den Motorgenerator (17) steuert, um ein Drehmoment (Mtrqad) zu ergänzen, das zu der berechneten Differenz äquivalent ist.

10. Vorrichtung (50) nach Anspruch 6 oder 7, wobei das, dass die Ausgabe den Rauchgrenzwert übersteigt, bedeutet, dass der Rauch, der erzeugt wird, wenn eine Menge an Kraftstoff, die in die Dieselmaschine (11) eingespritzt wird, für eine Menge von Luft übermäßig ist, die in die Dieselmaschine (11) gelangt.

## Revendications

1. Procédé de commande d'un véhicule hybride diesel (10), dans lequel le véhicule hybride diesel (10) comporte un moteur diesel (11) ;
une transmission multi-mode (12) qui peut automatiquement changer de vitesses ;
un embrayage (12a) qui commande la transmission de puissance entre le moteur diesel (11) et la transmission multi-mode (12) en embrayant ou en débrayant le moteur diesel (11) ; et
un moteur-générateur (17) qui ajoute une sortie du moteur diesel (11) avec une puissance électrique, où la puissance électrique est générée par le moteur diesel (11), ou est accumulée dans une batterie (20), le procédé comprenant le fait de :
déterminer si les vitesses sont changées pendant que le véhicule hybride diesel (10) est en marche avec le moteur diesel (11), et si les vitesses sont commandées pour être changées pendant que le véhicule hybride diesel (10) est en marche avec le moteur diesel (11),
le moteur-générateur (17) aidant la production de couple à compléter la réduction dans une sortie, qui est transmise depuis le moteur diesel (11), qui se produit depuis un début d'une commande d'embrayage d'un état embrayé à un état débrayé de l'embrayage (12) avec le moteur diesel (11) (S10) ; et le procédé étant
**caractérisé par** le fait de
déterminer si une sortie qui est un couple requis pour le moteur diesel (11) lorsque l'embrayage (12a) est embrayé avec le moteur diesel (11) et les vitesses sont commandées pour être changées par la transmission multi-mode (12) dépasse une limite de fumée après la fin de l'opération de changement de vitesse après le début de la commande d'embrayage de l'état embrayé à l'état débrayé de l'embrayage (12a), et si la sortie dépasse la limite de fumée (S11), commander le moteur diesel (11) de telle sorte que ce dernier fonctionne dans la limite de fumée,
le moteur-générateur (17) aidant la production de couple à compléter une insuffisance dans la sortie transmise du moteur diesel (11) qui se produit parce que le moteur diesel (11) est mis en marche dans la limite de fumée (S12), et
le couple produit après le début de la commande d'embrayage de l'état embrayé à l'état débrayé de l'embrayage (12a) lors de la commande de changement de vitesse, et le couple produit après la fin du changement de vitesse sont commandés de manière à réduire un choc de couple.

2. Procédé de commande d'un véhicule hybride diesel (10), dans lequel le véhicule hybride diesel (10) comporte un moteur diesel (11) ;
une transmission multi-mode (12) qui peut automatiquement changer de vitesses ;
un embrayage (12a) qui commande la transmission de puissance entre le moteur diesel (11) et la transmission multi-mode (12) en embrayant ou en débrayant le moteur diesel (11) ; et
un moteur-générateur (17) qui ajoute une sortie du moteur diesel (11) avec une puissance électrique, où l'énergie électrique est générée par le moteur diesel (11), ou est accumulée dans une batterie (20), le procédé étant
**caractérisé par** le fait de
déterminer si une sortie, qui est un couple requis pour le moteur diesel (11) lorsque les vitesses sont changées par la transmission multi-mode (12), l'embrayage (12a) est embrayé avec le moteur diesel (11) et le moteur diesel (11) commence à déplacer le véhicule hybride diesel (10) à partir d'un état de repos, dépasse une limite de fumée, et si la sortie de couple dépasse une limite de fumée,
commander le moteur diesel (11) de telle sorte que ce dernier fonctionne dans la limite de fumée, et
le moteur-générateur (17) aidant la production de couple à compléter une insuffisance dans une sortie du moteur diesel (11) qui se produit parce que le moteur diesel (11) est mis en marche dans la limite de fumée, où
le couple produit après la fin du changement de vitesse est commandé de manière à réduire un choc de couple.

3. Procédé selon la revendication 1 ou 2, dans lequel le fait de déterminer si la sortie dépasse la limite de fumée (S11) comporte le fait de
déterminer si une quantité de carburant (Qfin_mmt) qui doit être injectée dans le moteur diesel (11) en fonction des vitesses changées par la transmission multi-mode (12) dépasse une quantité maximale du carburant (Qafm) qui est combustible dans la limite de fumée et qui est calculée à partir d'une quantité d'air qui rentre dans le moteur diesel (11).

4. Procédé selon la revendication 3, dans lequel la production de couple d'assistance comporte le fait de
calculer une différence entre un couple (Vtrq) qui est requis pour le moteur diesel (11) en fonction des vitesses changées par la transmission multi-mode (12) et un couple (Etrq) qui peut être produit par le moteur diesel (11) avec la quantité maximale du carburant (Qafm) ; et
ajouter par le moteur-générateur (17) un couple (Mtrqad) qui est équivalent à la différence calculée (S13).

5. Procédé selon la revendication 1 ou 2, dans lequel le fait que la sortie dépasse la limite de fumée signifie que la fumée est générée lorsqu'une quantité de carburant qui est injectée dans le moteur diesel (11) est excessive pour une quantité d'air qui rentre dans le moteur diesel (11).

6. Appareil (50) pour commander un véhicule hybride diesel (10), dans lequel le véhicule hybride diesel (10) comporte
un moteur diesel (11) ;
une transmission multi-mode (12) qui peut automatiquement changer de vitesses ;
un embrayage (12a) qui commande la transmission de puissance entre le moteur diesel (11) et la transmission multi-mode (12) en embrayant ou en débrayant le moteur diesel (11) ; et
un moteur-générateur (17) qui ajoute une sortie du moteur diesel (11) avec une puissance électrique, où l'énergie électrique est générée par le moteur diesel (11), ou est accumulée dans une batterie (20), l'appareil (50) comprenant :
une unité de détermination de changement de vitesse qui détermine si les vitesses sont changées pendant que le véhicule hybride diesel (10) est en marche avec le moteur diesel (11) ;
une unité de commande de couple de temps de changement de vitesse qui commande, si l'unité de détermination de changement de vitesse détermine que les vitesses sont commandées pour être changées pendant que le véhicule hybride diesel (10) est en marche avec le moteur diesel (11), le moteur-générateur (17) pour aider la production de couple à compléter la réduction dans une sortie, qui est transmise depuis le moteur diesel (11), qui se produit depuis un début d'une commande d'embrayage d'un état embrayé à un état débrayé de l'embrayage (12a) avec le moteur diesel (11) ; l'appareil (50) étant
**caractérisé par**
une unité de détermination de sortie qui détermine si une sortie, qui est un couple requis pour le moteur diesel (11) lorsque l'embrayage (12a) est embrayé avec le moteur diesel (11) et les vitesses sont commandées pour être changées par la transmission multi-mode (12), dépasse une limite de fumée après la fin de l'opération de changement de vitesse après le début de la commande d'embrayage de l'état embrayé à l'état débrayé de l'embrayage (12a) ;
une unité de commande de moteur qui commande, si l'unité de détermination de sortie détermine que la sortie dépasse la limite de fumée, le moteur diesel (11) de telle sorte que ce dernier fonctionne dans la limite de fumée ; et
une unité de commande de couple de temps d'embrayage embrayé qui commande, si l'unité de détermination de sortie détermine que la sortie dépasse la limite de fumée, le moteur-générateur (17) aidant la production de couple à compléter une insuffisance dans une sortie du moteur diesel (11) qui se produit parce que le moteur diesel (11) est mis en marche dans la limite de fumée, où
le couple produit après le début de la commande d'embrayage de l'état embrayé à l'état débrayé de l'embrayage (12a) lors de la commande de changement de vitesse, et le couple produit après la fin du changement de vitesse sont commandés de manière à réduire un choc de couple.

7. Appareil (50) pour commander un véhicule hybride diesel (10), dans lequel le véhicule hybride diesel (10) comporte
un moteur diesel (11) ;
une transmission multi-mode (12) qui peut automatiquement changer de vitesses ;
un embrayage (12a) qui commande la transmission de puissance entre le moteur diesel (11) et la transmission multi-mode (12) en embrayant ou en débrayant le moteur diesel (11) ; et
un moteur-générateur (17) qui ajoute une sortie du moteur diesel (11) avec une puissance électrique, où la puissance électrique est générée par le moteur diesel (11), ou est accumulée dans une batterie (20), l'appareil (50) étant
**caractérisé par**
une unité de détermination de sortie qui détermine si une sortie, qui est un couple requis pour le moteur diesel (11) lorsque les vitesses sont changées par la transmission multi-mode (12), l'embrayage (12a) est embrayé avec le moteur diesel (11) et le moteur diesel (11) commence à déplacer le véhicule hybride diesel (10) d'un état de repos, dépasse une limite de fumée ;
une unité de commande de moteur qui commande, si l'unité de détermination de sortie détermine que la sortie de couple dépasse la limite de fumée, le moteur diesel (11) de telle sorte que ce dernier fonctionne dans la limite de fumée ; et
une unité de commande de couple de temps d'embrayage embrayé qui commande, si l'unité de détermination de sortie détermine que la sortie de couple dépasse la limite de fumée, le moteur-générateur (17) aidant la production de couple à compléter une insuffisance dans une sortie du moteur diesel (11) qui se produit parce que le moteur diesel (11) est mis en marche dans la limite de fumée, où
le couple produit après la fin du changement de vitesse est commandé de manière à réduire un choc de couple.

8. Appareil (50) selon la revendication 6 ou 7, dans lequel l'unité de détermination de sortie détermine si la sortie dépasse la limite de fumée selon qu'une quantité de carburant (Qfin_mmt) qui doit être injectée dans le moteur diesel (11) en fonction des vitesses changées par la transmission multi-mode (12) dépasse une quantité maximale du carburant (Qafm) qui est combustible dans la limite de fumée et qui est calculée à partir d'une quantité d'air qui rentre dans le moteur diesel (11).

9. Appareil (50) selon la revendication 8, dans lequel l'unité de commande de couple de temps d'embrayage embrayé,
calcule une différence entre un couple (Vtrq) qui est requis pour le moteur diesel (11) en fonction des vitesses changées par la transmission multi-mode (12) et un couple (Etrq) qui peut être produit par le moteur diesel (11) avec la quantité maximale du carburant (Qafm) ; et
commande le moteur-générateur (17) afin d'ajouter un couple (Mtrqad) qui est équivalent à la différence calculée.

10. Appareil (50) selon la revendication 6 ou 7, dans lequel le fait que la sortie dépasse la limite de fumée signifie que la fumée est générée lorsqu'une quantité de carburant qui est injectée dans le moteur diesel (11) est excessive pour une quantité d'air qui rentre dans le moteur diesel (11).
